# EUROPEAN PATENT SPECIFICATION

(11) **EP 3 467 652 B1**
(45) Date of publication and mention of the grant of the patent: **19.06.2024**
(21) Application number: 17818988.2
(22) Date of filing: 22.05.2017
(51) Int. Cl.: G06F 9/50

(54) **DATA BALANCING METHOD AND DEVICE**
VERFAHREN UND VORRICHTUNG ZUM DATENABGLEICH
PROCÉDÉ ET DISPOSITIF D'ÉQUILIBRAGE DE DONNÉES

(30) Priority: 30.06.2016 CN 201610511324
(43) Date of publication of application: 10.04.2019
(73) Proprietor: Huawei Technologies Co., Ltd., Longgang District Shenzhen, Guangdong 518129 (CN)
(72) Inventor: LU, Jingshi, Shenzhen, Guangdong 518129 (CN); TAO, Weizhong, Shenzhen, Guangdong 518129 (CN); WU, Gang, Shenzhen, Guangdong 518129 (CN)
(74) Representative: Maiwald GmbH
(86) International application number: PCT/CN2017/085376
(87) International publication number: WO 2018/000991

(56) References cited:
- WO-A1-2011/110026
- WO-A1-2013/116664
- CN-A- 101 697 526
- CN-A- 103 188 345
- CN-A- 105 550 323
- US-A1- 2002 124 137
- US-A1- 2011 131 569
- US-B2- 8 479 216

## Description

### TECHNICAL FIELD

The present invention relates to the field of data processing, and in particular, to a consistent hashing-based data balancing method and apparatus related to a distributed database system.

### BACKGROUND

Currently, a distributed database technology is a distributed technology widely used in the field of IT technologies. This technology is mainly used for web page caching, database caching, and the like to meet a user requirement on a network system response speed.
WO 2013/116664 A1 describes systems and methods that enable a general framework for partitioning application-defined jobs (e.g., computation) in a scalable environment. The general framework decouples partitioning of a job from the other aspects of the job. As a result, the effort required to define the application-defined computation in a scalable environment is reduced or minimized, as the user is not required to provide a partitioning algorithm. The general framework further allows a user to provide load balancing conditions to allow for modification of how partitions are assigned.

In a distributed database system based on a consistent hashing algorithm, a plurality of virtual nodes may be virtualized on a physical node, and the plurality of virtual nodes are mapped onto a ring by using a hash algorithm. In this way, a hash value range mapped onto the ring may be increased for the physical node. When a physical node is added to or deleted from the distributed database system, a quantity of virtual nodes associated with each physical node is adjusted, so that quantities of virtual nodes associated with all physical nodes tend to be equal, so that virtual nodes are balanced between all the physical nodes in the distributed database system. However, as the amount of data distributed in virtual node may vary greatly, redundant resource of a physical node needs to be considered to ensure normal running of service, and the physical node has to be deployed based on a requirement in case of a maximum amount of data, whereby it would increase costs. Alternatively, if redundant resource of a physical node is not considered, it would result in overload in the physical node and failure of the service.

In the case that the amounts of data carried by some virtual nodes in a distributed database system vary greatly, there has been yet no effective method so far for scheduling physical nodes in the distributed database system to implement data balance.

### SUMMARY

A technical problem to be resolved in embodiments of the present invention is to provide a data balancing method as defined by independent claim 1, to resolve a prior-art problem of data imbalance between physical nodes in a distributed database system. Further embodiments are provided by the dependent claims. Further embodiments of the description not falling under the scope of protection of the claims are provided for explanatory purpose only.

To resolve the foregoing problem, an embodiment of the present invention provides a data balancing method, including the following steps.

A data balancing apparatus first obtains load ratios of n weight factors and n weight values of each virtual node of m physical nodes in a distributed database system. For each virtual node, each weight factor is corresponding to a weight value. The weight factor is a parameter for estimating a specified dimension of a virtual node, and the specified dimension may be a service dimension and/or a resource dimension, or another dimension. The load ratio of the weight factor indicates a ratio of an actual parameter value to a rated parameter value of a specified dimension. For example, if the weight factor is a record count, a rated record count is 1,000,000 and an actual record count detected is 50,000, a load ratio of the record count is 50,000/1,000,000=50%. The virtual nodes in the distributed database system have a same quantity of weight factors, a same type of weight factor, and a same weight value configuration. For each virtual node in the distributed database system, the data balancing apparatus performs weighted averaging based on the load ratios of the n weight factors and the n weight values of the virtual node, to obtain a weight coefficient. For example, a virtual node has four weight factors: a memory usage, a record count, an access frequency, and a CPU usage, weight values of the four weight factors are 0.2, 0.3, 0.3, and 0.2, respectively, and load ratios of the four weight factors obtained by the data balancing apparatus are 0.1, 0.5, 0.6, and 0.8, respectively, a weight coefficient of the virtual node is 0.1 *0.2+0.5 *0.3+0.3 *0.6+0.2*0.8=0.51. The data balancing apparatus determines, based on a mapping relationship between the physical nodes and the virtual nodes, a virtual node associated with each physical node, and obtains a standard shard count based on a weight coefficient of the virtual node associated with the physical node. For example, for a physical node, a standard shard count is obtained by summating weight coefficients of all virtual nodes associated with the physical node, or a physical node standard shard count of the physical node is obtained by scaling up a sum of weight coefficients of all associated virtual nodes by a preset multiple, or a physical node standard shard count is obtained by performing weighted averaging on weight coefficients of all associated virtual node, or by performing weighted averaging on weight coefficients of all associated virtual node and then scaling up an obtained value by a preset multiple. It should be noted that, a same method for calculating a standard shard count is used for all the physical nodes. For example, a same multiple is used for multiplication, and a same weight value configuration is used for weighting. After obtaining standard shard counts of all of the m physical nodes, the data balancing apparatus determines, based on the standard shard counts, whether data distribution meets a data balancing criterion. If the data balancing criterion is not met, data balancing is performed on the distributed database system. Specifically, the data balancing apparatus migrates a virtual node of the m physical nodes, to migrate a virtual node of a physical node with a large standard shard count to a physical node with a small standard shard count, so that the standard shard counts of all the physical nodes are balanced. Balance means that one or more parameter values of each of a plurality of nodes vary within a specified range.

According to the foregoing embodiment, the weight coefficient of each virtual node is obtained based on the load ratios and the weight values of the weight factors, the standard shard count of each physical node is obtained based on the weight coefficient of the virtual node, and whether data distribution on each physical node meets the data balancing criterion is determined based on the standard shard count. In this way, data distribution on physical nodes can be estimated accurately, so that data balance is implemented between all virtual nodes.

With reference to the first aspect, in a first possible implementation, balancing data in the distributed database system includes the following steps.

Simulated migration which is also referred to as pre-migration is performed, based on a migration rule, on virtual nodes associated with the m physical nodes. The simulated migration means that no migration operation is actually performed, and is a simulation process of migrating a virtual node according to the migration rule. The migration rule is that the standard shard count of the m physical nodes, a quantity of virtual nodes, and weight coefficients of all virtual nodes of a same physical node are balanced. The data balancing apparatus determines whether virtual nodes associated with the m physical nodes meet the data balancing criterion after simulated migration. If yes, the data balancing apparatus performs, based on the foregoing migration rule, actual migration on the associated virtual nodes. After actual migration is performed, the m physical nodes can meet the data balancing criterion. If the m physical nodes do not meet the data balancing criterion after simulated migration, the data balancing apparatus selects at least one virtual node from the virtual nodes associated with the m physical nodes for splitting, and updates a mapping relationship between the physical nodes and virtual nodes, for example, selecting a virtual node with a maximum weight coefficient for splitting, or selecting, for splitting, a virtual node with a maximum weight coefficient in a physical node with a maximum standard shard count. After splitting, the data balancing apparatus performs, according to the migration rule, actual migration on virtual nodes associated with the m physical nodes, so that data balance is implemented between the m physical nodes. The preset migration rule may be specifically that a shard of the physical node with the maximum standard shard count is migrated to a physical node with a minimum standard shard count.

In the foregoing embodiment, when the physical nodes cannot meet the data balancing criterion, some virtual nodes are first split and then migrated. This can avoid a problem that a virtual node is a too coarse granularity to implement data balance. In addition, all virtual nodes do not need to be split, thereby effectively controlling a splitting range and a quantity of splitting times and reducing processing overheads.

With reference to the first aspect, in a second possible implementation, the selecting at least one virtual node from the virtual nodes associated with the m physical nodes for splitting into at least two virtual nodes includes: determining a physical node with a maximum standard shard count; selecting a virtual node with a maximum weight coefficient in the physical node; and splitting the virtual node into at least two virtual nodes of a same size.

In the foregoing embodiment, the virtual node with the maximum weight coefficient of the physical node with the maximum standard shard count is split into two virtual nodes of a same size. This can effectively control a quantity of splitting times and a splitting range and reduce processing overheads.

With reference to the first aspect, in a third possible implementation, the migration rule includes: grouping, based on the weight coefficients, the virtual nodes associated with the m physical nodes, where the rule for grouping may be grouping by preseted weight coefficient ranges, by rounding off value of weight coefficients, by rounding up value of weight coefficients, by rounding down value of weight coefficients etc., and a grouping purpose is to ensure that a weight coefficient of a virtual node in each group varies within a specified range; performing data balancing on each group after grouping, so that each physical node is mapped onto a same quantity of virtual nodes, where if a quantity of virtual nodes in a group is not an integer multiple of m which is the count of the physical nodes, there is an unassigned virtual node left in the group; and obtaining an unassigned virtual node in each group, and assigning all unassigned virtual nodes to the m physical nodes, so that quantities of virtual nodes are balanced between all the physical nodes, and the standard shard counts of the physical nodes are balanced.

In the foregoing embodiment, the virtual nodes associated with the physical nodes are grouped, and balancing is performed on quantities of the virtual nodes associated with the physical nodes in all groups, so that the quantities of the virtual nodes are balanced between all the physical nodes, and data balance is implemented between all the physical nodes. A balancing process is simple and with little calculation load.

With reference to the third possible implementation of the first aspect, in a fourth possible implementation, the grouping, based on the weight coefficients, the virtual nodes associated with the m physical nodes includes:
setting, by the data balancing apparatus, a plurality of weight coefficient ranges that do not overlap with each other, where each weight coefficient range is corresponding to one group, and the weight coefficient ranges may have a same step; for each virtual node, determining a weight coefficient range of the plurality of weight coefficient ranges within which a weight coefficient of the virtual node falls; and classifying the virtual node into a group corresponding to the weight coefficient range.

With reference to any one of the first aspect, or the first and the second possible implementations of the first aspect, in a fifth possible implementation, the performing weighted averaging based on the load ratios of the n weight factors and the n weight values, to obtain a weight coefficient of each virtual node includes:
detecting dynamic load ratios of the n weight factors of the virtual node, and performing weighted summation on the detected dynamic load ratios of the n weight factors and the n weight values to obtain a dynamic weight coefficient, where the dynamic load ratios of the weight factors indicate dynamically detected load ratios of the weight factors of the virtual node in preset duration, for example, if in one hour, a detected load ratio of a CPU usage of the virtual node is 50%, 50% is a dynamic load ratio of the CPU usage;
obtaining statically set static load ratios of the n weight factors of the virtual node, and performing weighted summation on the obtained static load ratios of the n weight factors and the n weight values to obtain a static weight coefficient, where the static load ratios of the weight factors indicate preconfigured load ratios of the weight factors, and are fixed values unrelated to actual load ratios of the weight factors; and performing, by the data balancing apparatus, weighted summation on the dynamic weight coefficient and the static weight coefficient of the virtual node to obtain the weight coefficient. For example, if a preconfigured load ratio of a CPU usage of a virtual node is 60%, 60% is a static load ratio of a weight factor, and an actual load ratio of the CPU usage of the virtual node may be 55%. The virtual nodes have a same weight factor configuration, a same dynamic weight coefficient weight configuration, and a same static weight coefficient weight configuration, to ensure that data distribution of all virtual nodes is estimated under a same criterion. For example, for a virtual node 1 and a virtual node 4, the virtual node 1 and the virtual node 4 have same weight factors: a CPU usage, a disk usage, and a record count, and the virtual node 1 and the virtual node 4 have same weight configurations: a dynamic weight coefficient weight Ws and a static weight coefficient weight Wd. The data balancing apparatus performs weighted summation on the dynamic weight coefficient and the static weight coefficient of the virtual node to obtain a weight coefficient.

In the foregoing embodiment, the dynamic load ratios of the weight factors and the static load ratios of the weight factors of the virtual node are obtained, and weighted averaging is performed on the load ratios of the two dimensions to obtain the weight coefficient of the virtual node. This can reduce an error in estimating data distribution of the virtual node.

With reference to the first aspect, in a sixth possible implementation, the data balancing criterion includes Lₘₐₓ<L_{average}x(1+α) and Lₘᵢₙ>L_{average}x(1-α), where and represents an and relationship, Lₘₐₓ is the maximum standard shard count of the m physical nodes, L_{average} is an average standard shard count of the m physical nodes, Lₘᵢₙ is a minimum standard shard count of the m physical nodes, α is a deviation coefficient and may be preset, and 0≤α≤1.

With reference to any one of the first aspect, or the first to the sixth possible implementations of the first aspect, in a seventh possible implementation, the n weight factors include either or both of a service-level weight factor and a resource-level weight factor;
the service-level weight factor includes either or both of an access frequency and a record count of a service object; and
the resource-level weight factor includes one or more of a CPU usage, a memory usage, a disk usage, and an IO interface throughput.

In the foregoing embodiment, the weight coefficient of the virtual node is calculated from a plurality of dimensions. In this way, data distribution of all the virtual nodes can be estimated accurately.

According to a second aspect, an embodiment of the present invention provides a data balancing apparatus, including an obtaining module, a weight coefficient calculation module, a standard shard count calculation module, a balance determining module, and a balancing module, where
the obtaining module is configured to obtain load ratios of n weight factors and n weight values of each virtual node of m physical nodes in a distributed database system, where m and n are integers greater than 1;
the weight coefficient calculation module is configured to perform weighted averaging based on the load ratios of the n weight factors and the n weight values, to obtain a weight coefficient of each virtual node;
the standard shard count calculation module is configured to obtain a standard shard count based on a weight coefficient of a virtual node associated with each physical node;
the balance determining module is configured to determine, based on respective corresponding standard shard counts of the m physical nodes, whether data distribution meets a data balancing criterion; and
the balancing module is configured to perform data balancing processing on the m physical nodes if a determining result of the balance determining module is no.

With reference to the second aspect, in a first possible implementation, the balancing module includes:
a migration simulation unit, configured to perform, according to a preset migration rule, simulated migration on virtual nodes associated with the m physical nodes;
a determining unit, configured to determine whether the m physical nodes meet the data balancing criterion after simulated migration;
an actual migration unit, configured to perform, according to the migration rule, actual migration on the virtual nodes associated with the m physical nodes if a determining result of the determining unit is yes; and
a splitting unit, configured to: if a determining result of the determining unit is no, select at least one virtual node from the virtual nodes associated with the m physical nodes for splitting, and perform, according to the migration rule, actual migration on virtual nodes associated with the m physical nodes after splitting.

With reference to the first possible implementation of the second aspect, in a second possible implementation, the splitting unit is configured to:
determine a physical node with a maximum standard shard count from the m physical nodes;
determine a virtual node with a maximum weight coefficient in the physical node with the maximum standard shard count; and
split the virtual node with the maximum weight coefficient into at least two virtual nodes of a same size.

With reference to the first possible implementation of the second aspect, in a third possible implementation, the migration rule includes:
grouping, based on the weight coefficients, the virtual nodes associated with the m physical nodes; for example, a grouping method may be using a weight coefficient range, rounding off, rounding up, or rounding down.
equally assigning virtual nodes in each group to the m physical nodes, where an integer number of virtual nodes in a same group are assigned to each of the physical node; and
assigning virtual nodes left in all groups after equal assignment to the m physical nodes.

With reference to the second aspect, in a fourth possible implementation, the data balancing criterion includes Lₘₐₓ<L_{average}x(1+α) and Lₘᵢₙ>L_{average}x(1-α), where and represents an and relationship, Lₘₐₓ is the maximum standard shard count of the physical nodes, L_{average} is an average standard shard count of the m physical nodes, Lₘᵢₙ is a minimum standard shard count of the physical nodes, α is a deviation coefficient, and 0≤α≤1.

With reference to any one of the second aspect, or the first to the fourth possible implementations, in a fifth possible implementation, the n weight factors include either or both of a service-level weight factor and a resource-level weight factor;
the service-level weight factor includes either or both of an access frequency and a record count of a service object; and
the resource-level weight factor includes one or more of a CPU usage, a memory usage, a disk usage, and an IO interface throughput.

According to a third aspect, this application provides a data balancing apparatus, including:
one or more processors, a memory, a bus system, a transceiver, and one or more programs, where the processor, the memory, and the transceiver are connected by using the bus system; and
the one or more programs are stored in the memory and include an instruction, and when being executed by a terminal, the instruction causes the terminal to perform any one of the first aspect, or the first to the seventh possible implementations of the first aspect.

According to a fourth aspect, this application provides a computer readable storage medium in which one or more programs are stored, where the one or more programs include an instruction, and when by a data balancing apparatus, the instruction causes the data balancing apparatus to perform any one of the first aspect, or the first to the seventh possible implementations of the first aspect.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of a distributed database system according to an embodiment of the present invention;
FIG. 2 is a schematic flowchart of a data balancing method according to an embodiment of the present invention;
FIG. 3 is another schematic flowchart of a data balancing method according to an embodiment of the present invention;
FIG. 4 is a schematic flowchart of a migration rule according to an embodiment of the present invention;
FIG. 5 is a schematic structural diagram of a data balancing apparatus according to an embodiment of the present invention; and
FIG. 6 is another schematic structural diagram of a data balancing apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

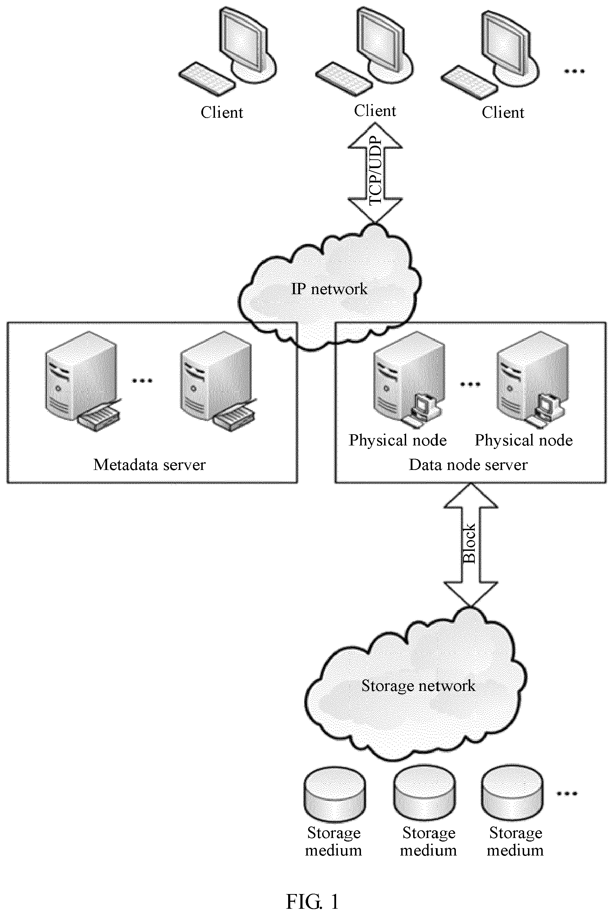

Referring to FIG. 1, FIG. 1 is a schematic structural diagram of a consistent hashing-based distributed database system according to an embodiment of the present invention. In this embodiment of the present invention, the distributed database system includes at least one client, a metadata server, a data node server, and a storage network. The at least one client communicates with the metadata server and the data node server via an IP network. A communications interface between the client and the metadata server or the data node server may be a TCP (Transmission Control Protocol, Transmission Control Protocol, TCP for short) interface or a UDP (User Datagram Protocol, User Datagram Protocol, UDP for short) interface. The metadata server includes a data balancing apparatus. The metadata server can be deployed independently, for example, may be a midrange computer, an X86 computer, or a personal computer server PC server, or may be combined with the data node server. The data node server includes a plurality of physical nodes. The physical node may be a midrange computer, an X86 computer, a personal computer server PC server, or the like. Data of the plurality of physical nodes may be stored in a storage medium on the storage network. A block IO (block IO) is used for reading and writing between the plurality of physical nodes and the storage network, that is, a storage medium is read and written based on a block. The storage medium may be an HDD (Hard Disk Drive, hard disk drive, HDD for short), an SSD (Solid State Drive, a solid state drive, SSD for short), a memory, or the like.

The metadata server mainly stores metadata (Metadata) of the database system. The metadata is information about organization of data, a data field, and a relationship thereof. In short, the metadata is data for describing data. The data balancing apparatus is responsible for overall distributed management of the distributed database system. The data balancing apparatus not only can be deployed on the metadata server but also can be built into the physical nodes. The distributed database system may be deployed in a dual-host manner or a cluster manner for high reliability. This is not limited in the present invention. The data balancing apparatus mainly has the following functions:

Metadata definition: storing and updating a mapping relationship between a virtual node and a physical node, defining of a duplicate of a virtual node, defining a method for calculating a load ratio of a weight factor and a weight coefficient, configuring and storing a deviation coefficient, defining a virtual node splitting policy, and the like.

Route management: managing route data of a service object, and invoking a metadata definition unit interface based on a mapping relationship between a virtual node and a physical node.

Duplication management: storing and updating a duplication relationship between an original virtual node and a duplicate virtual node, being responsible for management and control of duplication integrity, and invoking a metadata definition unit interface.

Node monitoring: monitoring service information and node resource information, invoking a communications service unit, obtaining information about data service nodes, and delivering a monitoring instruction.

Online migration: providing online migration by data shard without affecting a service, to ensure high migration availability, and invoking a metadata definition interface to change a route and duplication relationship.

Data balancing: implementing a data balance between physical nodes based on a data balancing criterion.

Metadata synchronization/persistence: synchronizing metadata definition information to all physical nodes, a client driver (Driver), and a slave node of a data balancing apparatus, and when metadata is changed, informing the foregoing nodes of changed information and performing persistence on metadata, so as to ensure high data reliability.

Communications service: providing a network capability of communicating with a peripheral network element (all physical nodes, a driver (Driver) of a client, and a slave node of a data balancing apparatus).

An agent Agent may be deployed on the plurality of physical nodes. The Agent is responsible for information exchange with the data balancing apparatus (for example, reporting node health information, receiving an instruction of the data balancing apparatus, and providing self-management for high node availability, such as role degradation in a case of network anomaly).

In addition, a driver Driver is further deployed on the client, and route information is cached in the Driver. In this way, the client may determine a route by using the cached route information, to access a corresponding physical node. This prevents the data balancing apparatus from becoming a bottleneck in route query during service access.

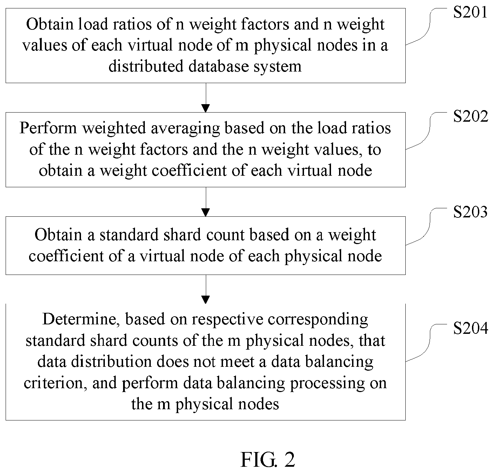

Referring to FIG. 2, FIG. 2 shows a data balancing method used in a consistent hashing - based distributed database system according to an embodiment of the present invention. In this embodiment of the present invention, the method includes the following steps.

S201. Obtain load ratios of n weight factors and n weight values of each virtual node of m physical nodes in a distributed database system, where m and n are integers greater than 1.

Specifically, a data balancing apparatus obtains the load ratios of the n weight factors of each virtual node of the m physical nodes. The data balancing apparatus may obtain load ratios of different weight factors of the virtual node by using agents deployed on the physical nodes. The virtual nodes have a same quantity of weight factors and a same type of weight factor, and also have a same weight value configuration. For example, n=4, the four weight factors are a record count, a memory usage, a CPU usage, and an access frequency, and configurations of weight values of the four weight factors are as follows: the record count is corresponding to a weight value w1, the memory usage is corresponding to a weight value w2, the CPU usage is corresponding to a weight value w3, and the access frequency is corresponding to a weight value w4. There are four physical nodes in the distributed database system: a physical node 1, a physical node 2, a physical node 3, and a physical node 4. The physical node 1 is associated with a virtual node a and a virtual node b, the physical node 2 is associated with a virtual node c and a virtual node d, the physical node 3 is associated with a virtual node e and a virtual node f, and the physical node 4 is associated with a virtual node g and the virtual node f. The virtual node a to the virtual node h all have the foregoing four weight factors, and each node has a same weight value configuration.

The weight factor is a parameter used to estimate a dimension of a virtual node, which may be a service dimension, a resource dimension, or another dimension. For example, the weight factor is a record count, a CPU usage, an access frequency, a disk usage, or a memory usage. The load ratio of the weight factor indicates a ratio of an actual parameter value to a rated parameter value of the weight factor. For example, if the weight factor is a memory usage, a rated parameter value of the memory usage is 8 G, and an actual parameter value of the memory usage is 1 G, a load ratio of the memory usage is 1/8=0.125.

S202. Perform weighted averaging based on the load ratios of the n weight factors and the n weight values, to obtain a weight coefficient of each virtual node.

Specifically, a method for calculating a weight coefficient of any one of virtual nodes associated with the m physical nodes is as follows: obtaining load ratios of n weight factors and n weight values of the virtual node, and performing weighted averaging based on the load ratios of the n weight factors and the n weight values, to obtain the weight coefficient of the virtual node.

In the foregoing example, for the virtual node a, assuming that load ratios of the four weight factors of the virtual node a are as follows: a load ratio of the record count is 0.5, a load ratio of the memory usage is 0.8, a load ratio of the CPU usage is 0.6, a load ratio of the access frequency is 0.6, and weight values of the four weight factors are 0.1, 0.2, 0.3, and 0.4 respectively, a weight coefficient of the virtual node a is calculated as follows: 0.5*0.1+0.8*0.2+0.6*0.3+0.6 *0.4=0.63. For the virtual node b, assuming that load ratios of the four weight factors of the virtual node b are as follows: a load ratio of the record count is 0.8, a load ratio of the memory usage is 0.2, a load ratio of the CPU usage is 0.5, a load ratio of the access frequency is 0.3, and the virtual node b has a same weight value configuration as the virtual node a, namely, corresponding weight values of the four weight factors of the virtual node b are 0.1, 0.2, 0.3, and 0.4 respectively, a weight coefficient of the virtual node b is calculated as follows: 0.8*0.1+0.2*0.2+0.5*0.3+0.3*0.4=0.39. The foregoing calculation method is also used for other virtual nodes in the distributed database system. Details are not repeated herein.

Optionally, the performing weighted averaging based on the load ratios of the n weight factors and the n weight values, to obtain a weight coefficient of each virtual node includes:
detecting dynamic load ratios of the n weight factors of the virtual node, and performing weighted averaging on the detected dynamic load ratios of the n weight factors and the n weight values, to obtain a dynamic weight coefficient, where n≥1 and is an integer;
obtaining static load ratios of the n weight factors, statically set by the virtual node, and performing weighted averaging on the obtained static load ratios of the n weight factors and the n weight values, to obtain a static weight coefficient; and
performing weighted averaging on the dynamic weight coefficient and the static weight coefficient to obtain the weight coefficient of the virtual node.

Specifically, the load ratios of the weight factors indicate dynamically detected load ratios of the weight factors of the virtual node in preset duration, and are actual load ratios if the virtual node. For example, if a detected load ratio of a CPU usage of the virtual node in one hour is 50%, 50% is a dynamic load ratio of the CPU usage. The static load ratios of the weight factors indicate preconfigured load ratios of the weight factors, and are fixed values. The static load ratios are unrelated to the actual load ratios of the weight factors. For example, if a preconfigured load ratio of a CPU usage of a virtual node is 60%, 60% is a dynamic load ratio of a weight factor, and an actual load ratio of the CPU usage of the virtual node may be 55%. The virtual nodes have a same weight factor configuration, a same dynamic weight coefficient weight configuration, and a same static weight coefficient weight configuration, to ensure that data distribution of all virtual nodes is estimated under a same criterion. For example, for a virtual node 1 and a virtual node 4, the virtual node 1 and the virtual node 4 have same weight factors: a CPU usage, a disk usage, and a record count, and the virtual node 1 and the virtual node 4 have same weight configurations: a dynamic weight coefficient weight Ws and a static weight coefficient weight Wd. The data balancing apparatus performs weighted summation on the dynamic weight coefficient and the static weight coefficient of the virtual node to obtain a weight coefficient.

The data balancing apparatus obtains the dynamic load ratios of the weight factors and the static load ratios of the weight factors of the virtual node, and performs weighted averaging on the load ratios of the two dimensions to obtain the weight coefficient of the virtual node. This can reduce an error in estimating data distribution of the virtual node.

S203. Obtain a standard shard count based on a weight coefficient of a virtual node of each physical node.

Specifically, the data balancing apparatus determines, based on a mapping relationship between the physical nodes and virtual nodes, a virtual node associated with each physical node. A method for determining a standard shard count of any one of the m physical nodes may be: obtaining the standard shard count of the physical node based on a sum of weight coefficients of all associated virtual nodes of the physical node.

In the foregoing example, the physical node 1 is associated with the virtual node a and the virtual node b, the weight coefficient of the virtual node a is 0.63, the weight coefficient of the virtual node b is 0.39, and a standard shard count of the physical node 1 is equal to a sum of the weight coefficients of the virtual node a and the virtual node b: 0.63+0.39=1.02.

S204. Determine, based on respective corresponding standard shard counts of the m physical nodes, whether data distribution meets a data balancing criterion.

Specifically, the data balancing criterion represents a criterion for balancing the standard shard counts of the m physical nodes, for example, the standard shard counts of the m physical nodes vary within a specified range.

S205. If no, perform data balancing processing on the m physical nodes.

In the foregoing embodiment, a standard shard count of the physical node is calculated based on the load ratios of the weight factors and the weight values, and the standard shard count is used to estimate data distribution, so as to perform accurate data balancing on the physical nodes in the distributed database system.

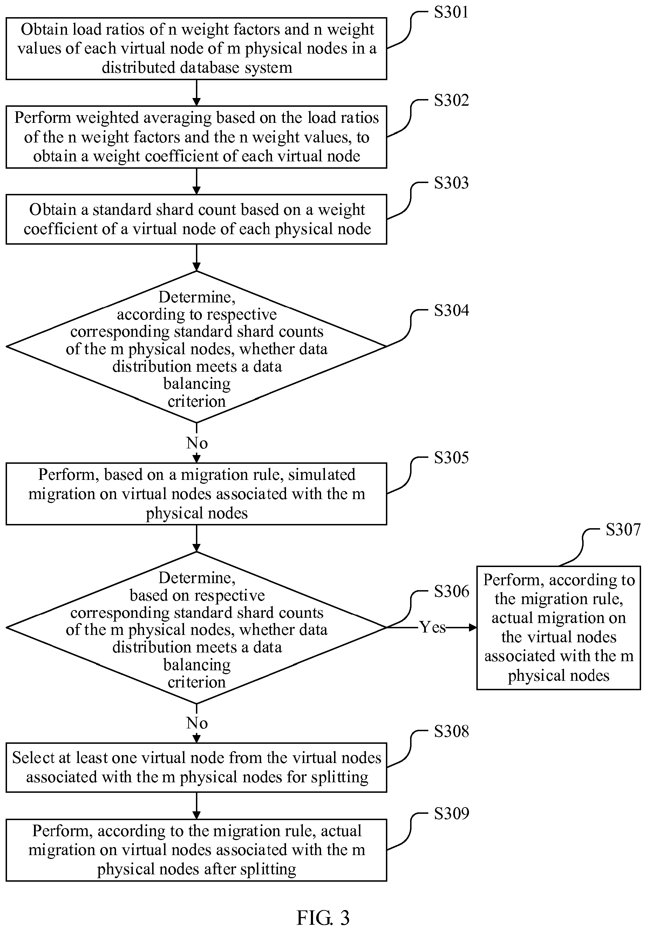

Referring to FIG. 3, FIG. 3 is another schematic flowchart of a data balancing method according to an embodiment of the present invention. In this embodiment of the present invention, the method includes the following steps.

S301. Obtain load ratios of n weight factors and n weight values of each virtual node of m physical nodes in a distributed database system.

Specifically, the m physical nodes are deployed in the distributed database system, and each physical node may periodically report, to a data balancing apparatus, load ratios of n weight factors of an associated virtual node. Weight values of the n weight factors may be preset, and all virtual nodes have a same weight value configuration. The data balancing apparatus may detect the load ratios of the weight factors by using an agent apparatus deployed on each physical node. The weight factor of the virtual node is a parameter used to estimate a dimension of the virtual node. The load ratio of the weight factor is a ratio of an actual parameter value to a rated parameter value of the dimension. A virtual node may have a plurality of different weight factors, and the plurality of different weight factors may belong to a plurality of dimensions. All the virtual nodes in the distributed database system have a same quantity of weight factors, a same type of weight factor, and a same weight value configuration, so that data distribution of the virtual nodes is compared under a same criterion, where m and n are integers greater than 1.

Optionally, the n weight factors include either or both of a service-level weight factor and a resource-level weight factor. The service-level weight factor includes either or both of an access frequency and a record count of a service object. The resource-level weight factor includes one or more of a CPU usage, a memory usage, a disk usage, and an IO interface throughput.

It should be noted that, when detecting that a physical node is added to or deleted from the distributed database system, the data balancing apparatus updates a mapping relationship between the physical nodes and virtual nodes, and the data balancing apparatus is triggered to obtain values of the n weight factors and the n weight values of each virtual node of the m physical nodes in the distributed database system, and then perform subsequent data balancing steps. This is because after the physical node is added or deleted, there is a high possibility that a data balancing criterion is not met in the distributed database system.

S302. Perform weighted averaging based on the load ratios of the n weight factors and the n weight values, to obtain a weight coefficient of each virtual node.

Specifically, a method for calculating a weight coefficient of any one of virtual nodes associated with the m physical nodes is: performing weighted averaging based on the load ratios of the n weight factors and the weight value configurations of the n weight factors obtained in S301, where all the virtual nodes have a same quantity of weight factors, a same type of weight factor, and a same weight value configuration. Assuming that load ratios of n weight factors of a virtual node are x1, x2, x3, ..., and xn, and weight value configurations are w1, w2, w3, ..., and wn, where wn represents a weight value of xn, a weight coefficient of the virtual node=x1*w1+x2*w2+x3*w3+, ..., xn*wn.

S303. Obtain a standard shard count based on a weight coefficient of a virtual node of each physical node.

Specifically, a method for calculating a standard shard count of any one of the m physical nodes may be: obtaining a weight coefficient of an associated virtual node of the physical node, summating the weight coefficient of the associated virtual node to obtain the standard shard count of the physical node.

For example, a physical node 1 is associated with a virtual node a and a virtual node b, an obtained weight coefficient of the virtual node a is 0.9, an obtained weight coefficient of the virtual node b is 1.2, and a standard shard count of the physical node 1 is equal to a sum of the weight coefficients of the associated virtual node a and the virtual node b: 0.9+1.2=2.1.

S304. Determine, based on respective corresponding standard shard counts of the m physical nodes, whether a data balancing criterion is met.

Specifically, the data balancing apparatus determines, based on the respective corresponding standard shard counts of the m physical nodes, whether the distributed database system meets the data balancing criterion. The data balancing criterion requests that the respective corresponding standard shard counts of the m physical nodes vary within a specified range.

In a possible implementation, the data balancing criterion is Lₘₐₓ<L_{average}x(1+α) and Lₘᵢₙ>L_{average}x(1-α), where and represents an and relationship, and conditions before and after and need to be met, Lₘₐₓ is a maximum standard shard count of the physical nodes, L_{average} is an average standard shard count of the m physical nodes, Lₘᵢₙ is a minimum standard shard count of the physical nodes, α is a deviation coefficient, 0≤α≤1, and the average standard shard count of the m physical nodes is obtained by dividing a sum of standard shard counts of the m physical nodes by m. For example, m=4, the distributed database system includes a physical node 1, a physical node 2, a physical node 3, and a physical node 4, a standard shard count of the physical node 1 is 2.5, a standard shard count of the physical node 2 is 3.5, a standard shard count of the physical node 3 is equal to 4.5, and a standard shard count of the physical node 4 is equal to 6.5, an average standard shard count of the four physical nodes is (2.5+3.5+4.5+6.5)/4=4.25. A minimum standard shard count of the four physical nodes is 2.5, and a maximum standard shard count of the four physical nodes is 6.5. The deviation coefficient may be preset, and a value of the deviation coefficient is from 0 to 1 (including 0 and 1).

The data balancing apparatus determines, based on the standard shard counts of the m physical nodes, whether data distribution meets the data balancing criterion. If a determining result is no, S305 is performed, or if a determining result is yes, S307 may be performed.

S305. Perform, based on a migration rule, simulated migration on virtual nodes associated with the m physical nodes.

Specifically, the simulated migration means that no virtual nodes are migrated actually, and is a simulation process of migrating a virtual node according to the migration rule.

Specifically, the migration rule includes: grouping, based on the weight coefficients, the virtual nodes associated with the m physical nodes.

In a possible implementation of the present invention, a grouping method may be: presetting, based on a distribution range of the weight coefficients in the distributed database system, a plurality of adjacent weight coefficient ranges that do not overlap with each other, where the weight coefficient ranges may have a same step, the step of the weight coefficient range is an absolute value of a difference between two end values of the weight coefficient range, and each weight coefficient range is corresponding to one group; and for any virtual node associated with the m physical nodes, determining a weight coefficient range to which a weight coefficient of the virtual node belongs, and determining, based on the weight coefficient range, a group to which the virtual node belongs. For example, a plurality of weight coefficient ranges are set, a weight coefficient range 1 is [1.5, 2.5) and is corresponding to a group 1, a weight coefficient range 2 is [2.5, 3.5] and is corresponding to a group 2, where a square bracket indicates that an end value is included, and a parenthesis indicates that an end value is not included. If a weight coefficient of a virtual node is 2, the weight coefficient belongs to the weight coefficient range 1, and the virtual node is categorized into the group 1.

In another possible implementation, a grouping method may be: rounding off the weight coefficients of the virtual nodes, and categorizing virtual nodes with a same resulting weight coefficient into a same group.

After all the virtual nodes of the m physical nodes are grouped, the following processing is performed on each group: determining a quantity of virtual nodes corresponding to the m physical nodes in the group, and equally assigning virtual nodes in each group to the m physical nodes, where a same integer number of virtual nodes are assigned to the physical nodes. If a quantity of virtual nodes in the group is not an integer multiple of m, there is a virtual node left in the group after equal assignment. If a quantity of virtual nodes in the group is less than m, there would remain in the group virtual node that is not assigned to any physical node. In this case, a virtual node left in each group is obtained, and left virtual nodes are assigned to the m physical nodes, to ensure that standard shard counts of the physical nodes meet the data balancing criterion.

For example, there are two physical nodes in the distributed database system currently: a physical node 1 and a physical node 2, the physical node 1 is associated with six virtual nodes, and the physical node 2 is associated with six virtual nodes. In this case, the distributed database system meets the data balancing criterion. When the distributed database system needs to be expanded, for example, a physical node 3 is added, in this case, there are three physical nodes in the distributed database system, and the three physical nodes do not meet the data balancing criterion. Weight coefficients of virtual nodes associated with the three physical nodes are shown in Table 1:

**Table 1**

| **Physical node 1** | | **Physical node 2** | | **Physical node 3** | |
|---|---|---|---|---|---|
| **Virtual node number** | **Weight coefficient** | **Virtual node number** | **Weight coefficient** | **Virtual node number** | **Weight coefficient** |
| a | 0.9 | g | 0.9 | | |
| b | 1 | h | 1 | | |
| c | 1.1 | i | 1.1 | | |
| d | 1.9 | j | 1.9 | | |
| e | 2 | k | 2 | | |
| f | 2.1 | 1 | 2.1 | | |

In Table 1, an average standard shard count of the three physical nodes is 18/3=6. Assuming that the deviation coefficient is 10%, a maximum standard shard count 9 is greater than the average standard shard count 6*(1+10%), and a minimum standard shard count 0 is less than the average standard shard count 6*(1-10%). Apparently, in this case, the data balancing criterion is not met, and data balancing processing needs to be performed on the m physical nodes.

All the virtual nodes associated with the three physical nodes are grouped based on the weight coefficients. Two weight coefficient ranges are set, a weight coefficient range 1 is [0.5, 1.5) and is corresponding to a group 1, and a weight coefficient range 2 is [1.5, 2.5) and is corresponding to a group 2. Virtual nodes belong to the group 1 are a, b, c, g, h, and i, and virtual nodes belong to the group 2 are d, e, f; j, k, and 1. An association relationship between the three physical nodes and the virtual nodes in the group 1 is shown in Table 2:

**Table 2**

| **Physical node 1** | **Physical node 2** | **Physical node 3** |
|---|---|---|
| **Virtual node number** | **Virtual node number** | **Virtual node number** |
| a | g | |
| b | h | |
| c | i | |

An association relationship between the three physical nodes and the virtual nodes in the group 2 is shown in Table 3:

**Table 3**

| **Physical node 1** | **Physical node 2** | **Physical node 3** |
|---|---|---|
| **Virtual node number** | **Virtual node number** | **Virtual node number** |
| d | j | |
| e | k | |
| f | 1 | |

In Table 2, there are six virtual nodes, the six virtual nodes need to be equally assigned to the three physical nodes, and two virtual nodes are assigned to each physical node. For the group 1, one virtual node of the physical node 1 (any one of a, b, or c) and one virtual node of the physical node 2 (any one of g, h, or i) need to be migrated to the physical node 3, so that two virtual nodes are assigned to each physical node. A quantity of the virtual nodes is exactly an integer multiple of a quantity of the physical nodes, and there is no virtual node left in the group 1. For example, after the virtual nodes in the group 1 are migrated, a mapping relationship between the physical nodes and the virtual nodes is as follows:

**Table 4**

| **Physical node 1** | **Physical node 2** | **Physical node 3** |
|---|---|---|
| **Virtual node number** | **Virtual node number** | **Virtual node number** |
| a | g | b |
| c | i | h |

In Table 3, there are six virtual nodes, the six virtual nodes need to be equally assigned to the three physical nodes, and two virtual nodes are assigned to each physical node. For the group 2, one virtual node of the physical node 1 (any one of d, e, or f) needs to be migrated to the physical node 3, and one virtual node of the physical node 2 needs to be assigned to the physical node 3, so that in the group 2, two virtual nodes are assigned to each physical node. A quantity of the virtual nodes in the group 2 is exactly an integer multiple of the quantity of the physical nodes, and there is no virtual node left in the group 2. For example, Table 5 shows a mapping relationship between the physical nodes and the virtual nodes after the virtual nodes in the group 2 are migrated:

**Table 5**

| **Physical node 1** | **Physical node 2** | **Physical node 3** |
|---|---|---|
| **Virtual node number** | **Virtual node number** | **Virtual node number** |
| d | j | e |
| f | l | k |

The data balancing apparatus does not need to process a virtual node left in each group, and in this case, a mapping relationship between the three physical nodes and their respective associated virtual nodes is shown in Table 6:

**Table 6**

| **Physical node 1** | | **Physical node 2** | | **Physical node 3** | |
|---|---|---|---|---|---|
| **Virtual node number** | **Weight coefficient** | **Virtual node number** | **Weight coefficient** | **Virtual node number** | **Weight coefficient** |
| a | 0.9 | g | 0.9 | b | 1 |
| c | 1.1 | i | 1.1 | e | 2 |
| d | 1.9 | j | 1.9 | h | 1 |
| f | 2.1 | l | 2.1 | k | 2 |

In Table 6, standard shard counts of the three physical nodes are all 6, and apparently, meet the data balancing criterion.

In another possible implementation, the migration rule includes: obtaining, by the data balancing apparatus, an average standard shard count of the m physical nodes, where the average standard shard count is obtained by dividing a sum of the standard shard counts of the m physical nodes by m; designing a plurality of possible virtual node migration plans based on the average standard shard count, where each virtual node migration plan requests that the standard shard count of the physical node approximates the average standard shard count; determining, by the data balancing apparatus, a target virtual node migration plan from the plurality of virtual node migration plans. A determining method may be as follows: for each virtual node migration plan, it is assumed that after executing the migration plan, firstly, the data balancing apparatus calculates a sum of squares of weight coefficients of virtual nodes associated with each of the m physical nodes, and calculates an average value of the sums of squares of weight coefficients of the m physical nodes. For example, two physical nodes are set in the distributed database system: a physical node 1 and a physical node 2. After a current virtual node migration plan is executed, the physical node 1 is associated with a virtual node a and a virtual node b, a weight coefficient of the virtual node a is 1, a weight coefficient of the virtual node b is 4, the physical node 2 is associated with a virtual node c and a virtual node d, a weight coefficient of the virtual node c is 2, and a weight coefficient of the virtual node d is 3. Based on the foregoing formula, a sum of squares of weight coefficients of the virtual nodes associated with the physical node 1 is 1×1+4×4=17, and a sum of squares of weight coefficients of the virtual nodes associated with the physical node 2 is 2×2+3×3=13. An average value of the sums of squares of weight coefficients of the m physical nodes is calculated: The average value is obtained by dividing a sum of the sums of squares of weight coefficients of the m physical nodes by m. Still in the foregoing example, the average value is (13+17)/2=15. Secondly, the data balancing apparatus calculates a sum of squares of differences between a sum of squares of weight coefficients of each of the m physical nodes and the average value. Still in the foregoing example, the sum of squares of the differences is (17-15) ²+ (13-15) ²=8. Lastly, a virtual node migration plan having a minimum sum of squares of differences is used as a target virtual node migration plan.

For example, as shown in Table 1, data distribution on the three physical nodes in the distributed database system apparently does not meet the data balancing criterion. A standard shard count of the physical node 1 is 9, a standard shard count of the physical node 2 is 9, a standard shard count of the physical node 3 is 0, and an average standard shard count of the three physical nodes is (9+9+0)/3=6. Based on a data balancing requirement, a standard shard count of each physical node is 6. It is assumed that all possible designed virtual node migration plans are as follows.

Plan 1: The virtual node a (0.9), the virtual node b (1), and the virtual node c (1.1) of the physical node 1 are migrated to the physical node 3, and the virtual node g (0.9), the virtual node h (1), and the virtual node i(1.1) of the physical node 2 are migrated to the virtual node 3. After migration, a mapping relationship between the physical nodes and the virtual nodes is shown in Table 7:

**Table 7**

| **Physical node 1** | | **Physical node 2** | | **Physical node 3** | |
|---|---|---|---|---|---|
| **Virtual node number** | **Weight coefficient** | **Virtual node number** | **Weight coefficient** | **Virtual node number** | **Weight coefficient** |
| | | | | a | 0.9 |
| | | | | b | 1 |
| | | | | c | 1.1 |
| d | 1.9 | j | 1.9 | g | 0.9 |
| e | 2 | k | 2 | h | 1 |
| f | 2.1 | 1 | 2.1 | i | 1.1 |

An average value of sums of squares of weight coefficients of the virtual nodes of the physical nodes in the distributed database system is equal to (0.9²+1²+1.1²+1.9²+2²+2.1²)*2/3=10.027. A sum of variances of the sums of squares of the virtual nodes of the physical nodes is equal to (12.02-10.027)²*2+(6.04-10.027)²=23.84. A greater sum of variances indicates a higher discreteness of the virtual nodes.

Plan 2: The virtual node b (1) and the virtual node e (2) of the physical node 1 are migrated to the physical node 3, and the virtual node h (1) and the virtual node k (2) of the physical node 2 are migrated to the physical node 3. After migration, a mapping relationship between the physical nodes and the virtual nodes is shown in Table 8:

**Table 8**

| **Node 1** | | **Node 2** | | **Node 3** | |
|---|---|---|---|---|---|
| **Shard number** | **Weight coefficient** | **Shard number** | **Weight coefficient** | **Shard number** | **Weight coefficient** |
| a | 0.9 | g | 0.9 | b | 1 |
| | | | | e | 2 |
| c | 1.1 | i | 1.1 | h | 1 |
| d | 1.9 | j | 1.9 | k | 2 |
| | | | | | |
| f | 2.1 | 1 | 2.1 | | |

An average value of sums of squares of weight coefficients of the virtual nodes of the physical nodes in the distributed database system is equal to (0.9²+1²+1.1²+1.9²+2²+2.1²)*2/3=10.027. A sum of variances of the sums of squares of weight coefficients of the virtual nodes of the physical nodes is equal to (10.04-10.027)²*2+(10-10.027)²=0.001. A smaller sum of variances indicates a lower discreteness of the virtual nodes. In plan 2, it is ensured that not only the standard shard counts of the physical nodes are balanced but also quantities of virtual nodes are balanced.

The data balancing apparatus uses plan 2 as the target migration plan.

S306. Determine, based on respective corresponding standard shard counts of the m physical nodes, whether data distribution meets a data balancing criterion after simulated migration.

Specifically, the data balancing apparatus determines whether standard shard counts of the m physical nodes meet the data balancing criterion after simulated migration. If yes, S307 is performed, and if no, S308 is performed.

S307. Perform, according to the migration rule, actual migration on the virtual nodes associated with the m physical nodes. For a migration method, refer to S305. Details are not repeated herein.

S308. Select at least one virtual node from the virtual nodes associated with the m physical nodes for splitting.

Specifically, when a virtual node of the physical nodes is a relatively coarse granularity, that is, a weight coefficient of the virtual node is relatively large, and the physical nodes still cannot meet the data balancing criterion even after virtual node migration is performed, a virtual node with a larger weight coefficient needs to be selected from the virtual nodes associated with the m physical nodes for splitting, and the virtual node is split into two or more virtual nodes. A selection method may be: selecting a virtual node with a maximum weight coefficient of all the virtual nodes associated with the m physical nodes for splitting, and splitting the virtual node into two virtual nodes of a same size, where a weight coefficient of each virtual node is 1/2 of that of the original virtual node; or determining a physical node with a maximum standard shard count, then determining a virtual node with a maximum weight coefficient of the physical node, and splitting the virtual node into two virtual nodes of a same size. After splitting, the data balancing apparatus updates a mapping relationship between the physical nodes and virtual nodes.

S309. Perform, according to the migration rule, actual migration on virtual nodes associated with the m physical nodes after splitting.

Specifically, the data balancing apparatus performs actual virtual node migration based on the updated mapping relationship between the physical nodes and virtual nodes and the migration rule, so that data balance is implemented between the physical nodes.

For example, there are four physical nodes in the distributed database system, and a mapping relationship between the physical nodes and virtual nodes, and weight coefficients of the virtual node are shown in Table 9:

**Table 9**

| **Virtual node number** | **Physical node number** | **Weight coefficient** |
|---|---|---|
| V000 | Node 1 | 1 |
| V001 | Node 1 | 1 |
| V002 | Node 4 | 1 |
| V003 | Node 2 | 1 |
| V004 | Node 2 | 1 |
| V005 | Node 4 | 1 |
| V006 | Node 3 | 1 |
| V007 | Node 3 | 1 |
| V008 | Node 3 | 1 |

In Table 9, a standard shard count of a physical node Node 1 is 2, a standard shard count of a physical node Node 2 is 2, a standard shard count of a physical node Node 3 is 3, and a standard shard count of a physical node Node 4 is 2.

Assuming that the deviation coefficient is 20%, an average standard shard count of the four physical nodes is 2.25. A maximum standard shard count 3>2.25(1+20%)=2.7 and does not meet the data balancing criterion. In addition, no matter how the virtual nodes are migrated, the data balancing criterion cannot be met. This triggers virtual node splitting. The data balancing apparatus determines that a physical node with a maximum standard shard count is Node 3, selects a virtual node with a maximum weight coefficient in Node 3 and splits the virtual node into two virtual nodes of a same size, for example, splits a virtual node V008 into V008a and V008b, and then migrates the virtual node V008b to the physical node Node 4. After migration is performed, the physical nodes meet the data balancing criterion. A mapping relationship between the physical nodes and virtual nodes obtained after migration is as follows:

**Table 10**

| **Virtual node number** | **Physical node number** | **Weight coefficient** |
|---|---|---|
| V000 | Node 1 | 1 |
| V001 | Node 1 | 1 |
| V002 | Node 4 | 1 |
| V003 | Node 2 | 1 |
| V004 | Node 2 | 1 |
| V005 | Node 4 | 1 |
| V006 | Node 3 | 1 |
| V007 | Node 3 | 1 |
| V008a | Node 3 | 0.5 |
| V008b | Node 4 | 0.5 |

It should be noted that, the virtual node may be in a form of a logical shard or a physical shard. For example, the physical shard is corresponding to a page, a block, a schema, tablespace, or the like of a database. When the virtual node is a physical shard, a method for migrating the physical shard has high migration efficiency, has little impact on the database and application, and is easier to implement hitless migration. When the virtual node is a logical shard, a method for migrating the logical shard has high management efficiency.

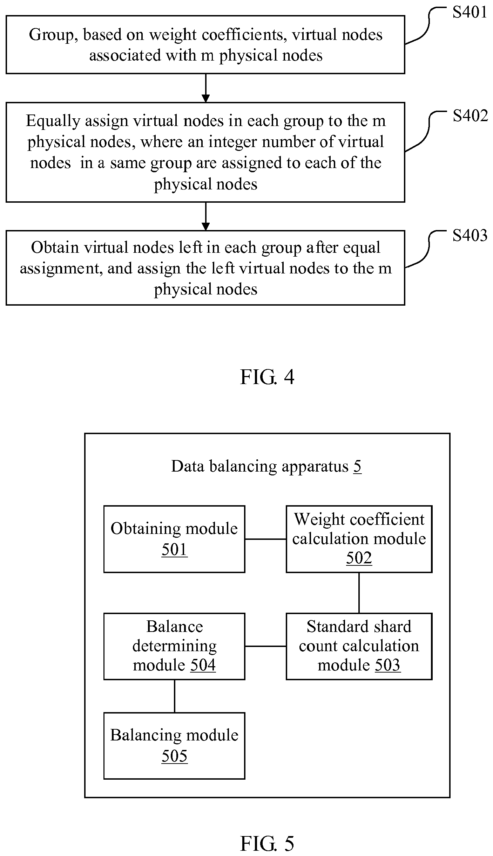

Referring to FIG. 5, FIG. 5 is a schematic structural diagram of a data balancing apparatus according to an embodiment of the present invention. The data balancing apparatus in this embodiment of the present invention is configured to perform the data balancing method in FIG. 2. For terminologies and processes, refer to the description of the embodiment in FIG. 2. The data balancing apparatus 5 includes an obtaining module 501, a weight coefficient calculation module 502, a standard shard count calculation module 503, a balance determining module 504, and a balancing module 505.

The obtaining module 501 is configured to obtain load ratios of n weight factors and n weight values of each virtual node of m physical nodes in a distributed database system, where m and n are integers greater than 1.

The weight coefficient calculation module 502 is configured to perform weighted averaging based on the load ratios of the n weight factors and the n weight values, to obtain a weight coefficient of each virtual node.

The standard shard count calculation module 503 is configured to obtain a standard shard count based on a weight coefficient of a virtual node associated with each physical node.

The balance determining module 504 is configured to determine, based on respective corresponding standard shard counts of the m physical nodes, whether data distribution meets a data balancing criterion.

The balancing module 505 is configured to perform data balancing processing on the m physical nodes if a determining result of the balance determining module is no.

Optionally, the balancing module 505 includes a migration simulation unit, a determining unit, an actual migration unit, and a splitting unit.

The migration simulation unit is configured to perform, according to a preset migration rule, simulated migration on virtual nodes associated with the m physical nodes.

The determining unit is configured to determine whether the m physical nodes meet the data balancing criterion after simulated migration.

The actual migration unit is configured to perform, according to the migration rule, actual migration on the virtual nodes associated with the m physical nodes if a determining result of the determining unit is yes.

The splitting unit is configured to: if a determining result of the determining unit is no, select at least one virtual node from the virtual nodes associated with the m physical nodes for splitting, and perform, according to the migration rule, actual migration on virtual nodes associated with the m physical nodes after splitting.

Optionally, the splitting unit is configured to:
determine a physical node with a maximum standard shard count from the m physical nodes;
determine a virtual node with a maximum weight coefficient in the physical node with the maximum standard shard count; and
split the virtual node with the maximum weight coefficient into at least two virtual nodes of a same size.

Optionally, the migration rule includes:
grouping, based on the weight coefficients, the virtual nodes associated with the m physical nodes;
equally assigning virtual nodes in each group to the m physical nodes, where an integer number of virtual nodes in a same group are assigned to each of the physical node; and
assigning virtual nodes left in all groups after equal assignment to the m physical nodes.

Optionally, the data balancing criterion includes Lₘₐₓ<L_{average}x(1+α) and Lₘᵢₙ>L_{average}x(1-α), where and represents an and relationship, Lₘₐₓ is the maximum standard shard count of the physical nodes, L_{average} is an average standard shard count of the m physical nodes, Lₘᵢₙ is a minimum standard shard count of the physical nodes, α is a deviation coefficient, and 0≤α≤1.

Optionally, the n weight factors include either or both of a service-level weight factor and a resource-level weight factor;
the service-level weight factor includes either or both of an access frequency and a record count of a service object; and
the resource-level weight factor includes one or more of a CPU usage, a memory usage, a disk usage, and an IO interface throughput.

This embodiment of the present invention is based on a same idea as the embodiments in FIG. 2 to FIG. 4, technical effects thereof are also the same as those of the embodiments in FIG. 2 to FIG. 4. For a specific process, refer to the description of the embodiments in FIG. 2 to FIG. 4. Details are not repeated herein.

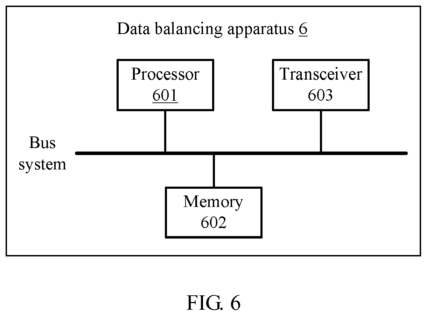

Referring to FIG. 6, FIG. 6 is a schematic structural diagram of a data balancing apparatus according to an embodiment of the present invention. In this embodiment of the present invention, the data balancing apparatus 6 includes a processor 601, a memory 602, and a transceiver 603. The transceiver 603 is configured to send data to and receive data from an external device. The data balancing apparatus may have one or more processors 601. In some embodiments of the present invention, the processor 601, the memory 602, and the transceiver 603 may be connected by using a bus system or in another manner. The data balancing apparatus 6 may be configured to perform the method shown in FIG. 2. For meanings and examples of terminologies used in this embodiment, refer to the embodiment corresponding to FIG. 2. Details are not repeated herein.

The memory 602 stores program code. The processor 601 is configured to invoke the program code stored in the memory 602, and is configured to perform the following operations:
obtaining load ratios of n weight factors and n weight values of each virtual node of m physical nodes in a distributed database system, where m and n are integers greater than 1;
performing weighted averaging based on the load ratios of the n weight factors and the n weight values, to obtain a weight coefficient of each virtual node;
obtaining a standard shard count based on a weight coefficient of a virtual node associated with each physical node;
determining, based on respective corresponding standard shard counts of the m physical nodes, whether data distribution meets a data balancing criterion; and
if no, performing data balancing processing on the m physical nodes.

Optionally, the performing, by the processor 601, data balancing processing on the m physical nodes includes:
performing, according to a preset migration rule, simulated migration on virtual nodes associated with the m physical nodes, and determining whether the m physical nodes meet the data balancing criterion after simulated migration;
if yes, performing, according to the migration rule, actual migration on the virtual nodes associated with the m physical nodes; or
if no, selecting at least one virtual node from the virtual nodes associated with the m physical nodes for splitting, and performing, according to the migration rule, actual migration on virtual nodes associated with the m physical nodes after splitting.

Optionally, the selecting, by the processor 601, at least one virtual node from the virtual nodes associated with the m physical nodes for splitting includes:
determining a physical node with a maximum standard shard count from the m physical nodes;
determining a virtual node with a maximum weight coefficient in the physical node with the maximum standard shard count; and
splitting the virtual node with the maximum weight coefficient into at least two virtual nodes of a same size.

Optionally, the migration rule includes:
grouping, based on the weight coefficients, the virtual nodes associated with the m physical nodes;
equally assigning virtual nodes in each group to the m physical nodes, where an integer number of virtual nodes in a same group are assigned to each of the physical node; and
assigning virtual nodes left in all groups after equal assignment to the m physical nodes.

Optionally, the grouping, by the processor 601, based on the weight coefficients, the virtual nodes associated with the m physical nodes includes:
obtaining weight coefficients of the virtual nodes associated with the m physical nodes; and
determining a weight coefficient range to which a weight coefficient of each virtual node belongs, and categorizing the virtual node into a group corresponding to the weight coefficient range of the virtual node.

Optionally, the data balancing criterion includes Lₘₐₓ<L_{average}x(1+α) and Lₘᵢₙ>L_{average}x(1-α), where and represents an and relationship, Lₘₐₓ is the maximum standard shard count of the physical nodes, L_{average} is an average standard shard count of the m physical nodes, Lₘᵢₙ is a minimum standard shard count of the physical nodes, α is a deviation coefficient, and 0≤α≤1.

Optionally, the n weight factors include either or both of a service-level weight factor and a resource-level weight factor;
the service-level weight factor includes either or both of an access frequency and a record count of a service object; and
the resource-level weight factor includes one or more of a CPU usage, a memory usage, a disk usage, and an IO interface throughput.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include a magnetic disk, an optical disc, a read-only memory (Read-Only Memory, ROM), or a random access memory (Random Access Memory, RAM).

What is disclosed above is merely example embodiments of the present invention, and certainly is not intended to limit the protection scope of the present invention. A person of ordinary skill in the art may understand that all or some of processes that implement the foregoing embodiments and equivalent modifications made in accordance with the claims of the present invention shall fall within the scope of the present invention.

## Claims

1. A data balancing method, comprising
obtaining (S201) load ratios of n weight factors and n weight values of each virtual node of m physical nodes in a distributed database system, wherein m and n are integers greater than 1;
performing (S202) weighted averaging based on the load ratios of the n weight factors and the n weight values, to obtain a weight coefficient of each virtual node;
obtaining (S203) a standard shard count based on a weight coefficient of a virtual node associated with each physical node;
determining (S204), based on respective corresponding standard shard counts of the m physical nodes, whether data distribution meets a data balancing criterion; and
if no, performing data balancing processing on the m physical nodes, **characterised in that** the performing data balancing processing on the m physical nodes comprises:
performing, according to a preset migration rule, simulated migration on virtual nodes associated with the m physical nodes, and determining whether the m physical nodes meet the data balancing criterion after simulated migration;
if yes, performing, according to the migration rule, actual migration on the virtual nodes associated with the m physical nodes; or
if no, selecting at least one virtual node from the virtual nodes associated with the m physical nodes for splitting, and performing, according to the migration rule, actual migration on virtual nodes associated with the m physical nodes after splitting, wherein the selecting at least one virtual node from the virtual nodes associated with the m physical nodes for splitting comprises:
determining a physical node with a maximum standard shard count from the m physical nodes;
determining a virtual node with a maximum weight coefficient in the physical node with the maximum standard shard count; and
splitting the virtual node with the maximum weight coefficient into at least two virtual nodes of a same size, wherein the migration rule comprises:
grouping, based on the weight coefficients, the virtual nodes associated with the m physical nodes;
equally assigning virtual nodes in each group to the m physical nodes, wherein an integer number of virtual nodes in a same group are assigned to each of the physical node; and
assigning virtual nodes left in all groups after equal assignment to the m physical nodes, wherein the grouping, based on the weight coefficients, the virtual nodes associated with the m physical nodes comprises:
obtaining weight coefficients of the virtual nodes associated with the m physical nodes; and
determining a weight coefficient range to which a weight coefficient of each virtual node belongs, and categorizing the virtual node into a group corresponding to the weight coefficient range of the virtual node.

2. The method according to claim 1, wherein the data balancing criterion is **characterized by** comprising Lₘₐₓ<L_{average}x(1+α) and Lₘᵢₙ>L_{average}x(1-α), wherein and represents an and relationship, Lₘₐₓ is the maximum standard shard count of the physical nodes, L_{average} is an average standard shard count of the m physical nodes, Lₘᵢₙ is a minimum standard shard count of the physical nodes, α is a deviation coefficient, and 0≤α≤1.

3. The method according to any one of claims 1 to 2, wherein the n weight factors is **characterized by** comprising either or both of a service-level weight factor and a resource-level weight factor;
the service-level weight factor comprises either or both of an access frequency and a record count of a service object; and
the resource-level weight factor is **characterized by** comprising at least one of a CPU usage, a memory usage, a disk usage, and an IO interface throughput.

4. A data balancing apparatus, comprising
an obtaining module (501), configured to obtain load ratios of n weight factors and n weight values of each virtual node of m physical nodes in a distributed database system, wherein m and n are integers greater than 1;
a weight coefficient calculation module (502), configured to perform weighted averaging based on the load ratios of the n weight factors and the n weight values, to obtain a weight coefficient of each virtual node;
a standard shard count calculation module (503), configured to obtain a standard shard count based on a weight coefficient of a virtual node associated with each physical node;
a balance determining module (504), configured to determine, based on respective corresponding standard shard counts of the m physical nodes, whether data distribution meets a data balancing criterion; and
a balancing module (505), configured to perform data balancing processing on the m physical nodes if a determining result of the balance determining module is no, **characterized in that** the balancing module comprising:
a migration simulation unit, configured to perform, according to a preset migration rule, simulated migration on virtual nodes associated with the m physical nodes;
a determining unit, configured to determine whether the m physical nodes meet the data balancing criterion after simulated migration;
an actual migration unit, configured to perform, according to the migration rule, actual migration on the virtual nodes associated with the m physical nodes if a determining result of the determining unit is yes; and
a splitting unit, configured to: if a determining result of the determining unit is no, select at least one virtual node from the virtual nodes associated with the m physical nodes for splitting, and perform, according to the migration rule, actual migration on virtual nodes associated with the m physical nodes after splitting, wherein the splitting unit is configured to:
determine a physical node with a maximum standard shard count from the m physical nodes;
determine a virtual node with a maximum weight coefficient in the physical node with the maximum standard shard count; and
split the virtual node with the maximum weight coefficient into at least two virtual nodes of a same size, wherein the migration rule comprises:
grouping, based on the weight coefficients, the virtual nodes associated with the m physical nodes;
equally assigning virtual nodes in each group to the m physical nodes, wherein an integer number of virtual nodes in a same group are assigned to each of the physical node; and
assigning virtual nodes left in all groups after equal assignment to the m physical nodes.

5. The apparatus according to claim 4, wherein the data balancing criterion is **characterized by** comprising Lₘₐₓ<L_{average}x(1+α) and Lₘᵢₙ>L_{average}x(1-α), wherein and represents an and relationship, Lₘₐₓ is the maximum standard shard count of the physical nodes, L_{average} is an average standard shard count of the m physical nodes, Lₘᵢₙ is a minimum standard shard count of the physical nodes, α is a deviation coefficient, and 0≤α≤1.

6. The apparatus according to any one of claims 4 to 5, wherein the n weight factors are **characterized by** comprising either or both of a service-level weight factor and a resource-level weight factor;
the service-level weight factor comprises either or both of an access frequency and a record count of a service object; and
the resource-level weight factor comprises one or more of a CPU usage, a memory usage, a disk usage, and an IO interface throughput.

## Patentansprüche

1. Datenabgleichverfahren, das umfasst:
Erhalten (S201) von Lastverhältnissen von n Gewichtungsfaktoren und n Gewichtungswerten jedes virtuellen Knotens von m physischen Knoten in einem verteilten Datenbanksystem, wobei m und n ganze Zahlen größer als 1 sind;
Durchführen (S202) einer gewichteten Mittelung basierend auf den Lastverhältnissen der n Gewichtungsfaktoren und der n Gewichtungswerte, um einen Gewichtungskoeffizienten jedes virtuellen Knotens zu erhalten;
Erhalten (S203) einer standardmäßigen Shard-Anzahl basierend auf einem Gewichtungskoeffizienten eines virtuellen Knotens, der jedem physischen Knoten zugeordnet ist;
Bestimmen (S204), basierend auf jeweiligen entsprechenden standardmäßigen Shard-Anzahlen der m physischen Knoten, ob eine Datenverteilung ein Datenabgleichkriterium erfüllt; und
falls nein, Durchführen einer Datenabgleichverarbeitung an den m physischen Knoten, **dadurch gekennzeichnet, dass** das Durchführen der Datenabgleichverarbeitung an den m physischen Knoten umfasst:
Durchführen, gemäß einer voreingestellten Migrationsregel, einer simulierten Migration an virtuellen Knoten, die den m physischen Knoten zugeordnet sind, und Bestimmen,
ob die m physischen Knoten das Datenabgleichkriterium nach der simulierten Migration erfüllen;
falls ja, Durchführen, gemäß der Migrationsregel, einer tatsächlichen Migration an den virtuellen Knoten, die den m physischen Knoten zugeordnet sind; oder
falls nein, Auswählen mindestens eines virtuellen Knotens von den virtuellen Knoten, die den m physischen Knoten zugeordnet sind, zum Aufteilen und Durchführen, gemäß der Migrationsregel, der tatsächlichen Migration an virtuellen Knoten, die den m physischen Knoten zugeordnet sind, nach dem Aufteilen, wobei das Auswählen mindestens eines virtuellen Knotens von den virtuellen Knoten, die den m physischen Knoten zugeordnet sind, zum Aufteilen umfasst:
Bestimmen eines physischen Knotens mit einer maximalen standardmäßigen Shard-Anzahl von den m physischen Knoten;
Bestimmen eines virtuellen Knotens mit einem maximalen Gewichtungskoeffizienten in dem physischen Knoten mit der maximalen standardmäßigen Shard-Anzahl; und
Aufteilen des virtuellen Knotens mit dem maximalen Gewichtungskoeffizienten in mindestens zwei virtuelle Knoten einer gleichen Größe, wobei die Migrationsregel umfasst:
Gruppieren, basierend auf den Gewichtungskoeffizienten, der virtuellen Knoten, die den m physischen Knoten zugeordnet sind;
gleichmäßiges Zuweisen von virtuellen Knoten in jeder Gruppe zu den m physischen Knoten, wobei eine ganzzahlige Anzahl von virtuellen Knoten in einer gleichen Gruppe jedem des physischen Knotens zugewiesen wird; und
Zuweisen von virtuellen Knoten, die in allen Gruppen nach gleichmäßiger Zuweisung zu den m physischen Knoten verbleiben, wobei das Gruppieren, basierend auf den Gewichtungskoeffizienten, der virtuellen Knoten, die den m physischen Knoten zugeordnet sind, umfasst:
Erhalten von Gewichtungskoeffizienten der virtuellen Knoten, die den m physischen Knoten zugeordnet sind; und
Bestimmen eines Gewichtungskoeffizientenbereichs, zu dem ein Gewichtungskoeffizient jedes virtuellen Knotens gehört, und Kategorisieren des virtuellen Knotens in eine Gruppe, die dem Gewichtungskoeffizientenbereich des virtuellen Knotens entspricht.

2. Verfahren nach Anspruch 1, wobei das Datenabgleichkriterium
**dadurch gekennzeichnet ist, dass** es Lₘₐₓ<L_{Durchschnitt}x(1+α) und Lₘᵢₙ>L_{Durchschnitt}x(1-α) umfasst, wobei und eine und-Beziehung darstellt, Lₘₐₓ die maximale standardmäßige Shard-Anzahl der physischen Knoten ist, L_{Durchschnitt} eine durchschnittliche standardmäßige Shard-Anzahl der m physischen Knoten ist, Lₘᵢₙ eine minimale standardmäßige Shard-Anzahl der physischen Knoten ist, α ein Abweichungskoeffizient ist und 0≤α≤1.

3. Verfahren nach einem der Ansprüche 1 bis 2, wobei die n Gewichtungsfaktoren **dadurch gekennzeichnet sind, dass** sie einen oder beide eines Dienst-Ebenengewichtungsfaktors und eines Ressourcen-Ebenengewichtungsfaktors umfassen;
der Dienst-Ebenengewichtungsfaktor entweder eine oder beide einer Zugriffsfrequenz und einer Satzanzahl eines Dienstobjekts umfasst; und
der Ressourcen-Ebenengewichtungsfaktor **dadurch gekennzeichnet ist, dass** er mindestens eines von einer CPU-Verwendung, einer Speicherverwendung, einer Festplattenverwendung und einem IO-Schnittstellendurchsatz umfasst.

4. Datenabgleichvorrichtung, die umfasst:
ein Erhaltungsmodul (501), das konfiguriert ist, um Lastverhältnisse von n Gewichtungsfaktoren und n Gewichtungswerten jedes virtuellen Knotens von m physischen Knoten in einem verteilten Datenbanksystem zu erhalten, wobei m und n ganze Zahlen größer als 1 sind;
ein Gewichtungskoeffizientenberechnungsmodul (502), das konfiguriert ist, um eine gewichtete Mittelung basierend auf den Lastverhältnissen der n Gewichtungsfaktoren und der n Gewichtungswerte durchzuführen, um einen Gewichtungskoeffizienten jedes virtuellen Knotens zu erhalten;
ein Modul (503) zum Berechnen einer standardmäßigen Shard-Anzahl, das konfiguriert ist, um eine standardmäßige Shard-Anzahl basierend auf einem Gewichtungskoeffizienten eines virtuellen Knotens, der jedem physischen Knoten zugeordnet ist, zu erhalten;
ein Abgleichbestimmungsmodul (504), das konfiguriert ist, um basierend auf jeweiligen entsprechenden standardmäßigen Shard-Anzahlen der m physischen Knoten zu bestimmen, ob die Datenverteilung ein Datenabgleichkriterium erfüllt; und
ein Abgleichmodul (505), das konfiguriert ist, um die Datenabgleichverarbeitung an den m physischen Knoten durchzuführen, falls ein Bestimmungsergebnis des Abgleichbestimmungsmoduls nein ist, **dadurch gekennzeichnet, dass** das Abgleichmodul umfasst:
eine Migrationssimulationseinheit, die konfiguriert ist, um gemäß einer voreingestellten Migrationsregel die simulierte Migration an virtuellen Knoten, die den m physischen Knoten zugeordnet sind, durchzuführen;
eine Bestimmungseinheit, die konfiguriert ist, um zu bestimmen, ob die m physischen Knoten das Datenabgleichkriterium nach der simulierten Migration erfüllen;
eine Einheit für tatsächliche Migration, die konfiguriert ist, um gemäß der Migrationsregel eine tatsächliche Migration an den virtuellen Knoten, die den m physischen Knoten zugeordnet sind, durchzuführen, falls ein Bestimmungsergebnis der Bestimmungseinheit ja ist; und
eine Aufteilungseinheit, die konfiguriert ist zum: falls ein Bestimmungsergebnis der Bestimmungseinheit nein ist, Auswählen mindestens eines virtuellen Knotens von den virtuellen Knoten, die den m physischen Knoten zugeordnet sind, zum Aufteilen und Durchführen, gemäß der Migrationsregel, der tatsächlichen Migration an virtuellen Knoten, die den m physischen Knoten zugeordnet sind, nach dem Aufteilen, wobei die Aufteilungseinheit konfiguriert ist zum:
Bestimmen eines physischen Knotens mit einer maximalen standardmäßigen Shard-Anzahl von den m physischen Knoten;
Bestimmen eines virtuellen Knotens mit einem maximalen Gewichtungskoeffizienten in dem physischen Knoten mit der maximalen standardmäßigen Shard-Anzahl; und Aufteilen des virtuellen Knotens mit dem maximalen Gewichtungskoeffizienten in mindestens zwei virtuelle Knoten einer gleichen Größe, wobei die Migrationsregel umfasst:
Gruppieren, basierend auf den Gewichtungskoeffizienten, der virtuellen Knoten, die den m physischen Knoten zugeordnet sind;
gleichmäßiges Zuweisen von virtuellen Knoten in jeder Gruppe zu den m physischen Knoten, wobei eine ganzzahlige Anzahl von virtuellen Knoten in einer gleichen Gruppe jedem des physischen Knotens zugewiesen wird; und
Zuweisen von virtuellen Knoten, die in allen Gruppen nach der gleichmäßigen Zuweisung zu den m physischen Knoten verbleiben.

5. Vorrichtung nach Anspruch 4, wobei das Datenabgleichkriterium
**dadurch gekennzeichnet ist, dass** es Lₘₐₓ<L_{Durchschnitt}x(1+α) und Lₘᵢₙ>L_{Durchschnitt}x(1-α) umfasst, wobei und eine und-Beziehung darstellt, Lₘₐₓ die maximale standardmäßige Shard-Anzahl der physischen Knoten ist, L_{Durchschnitt} eine durchschnittliche standardmäßige Shard-Anzahl der m physischen Knoten ist, Lₘᵢₙ eine minimale standardmäßige Shard-Anzahl der physischen Knoten ist, α ein Abweichungskoeffizient ist und 0≤α≤1.

6. Vorrichtung nach einem der Ansprüche 4 bis 5, wobei die n Gewichtungsfaktoren **dadurch gekennzeichnet sind, dass** sie einen oder beide eines Dienst-Ebenengewichtungsfaktors und eines Ressourcen-Ebenengewichtungsfaktors umfassen;
der Dienst-Ebenengewichtungsfaktor entweder eine oder beide einer Zugriffsfrequenz und einer Satzanzahl eines Dienstobjekts umfasst; und
der Ressourcen-Ebenengewichtungsfaktor eines oder mehrere von einer CPU-Verwendung, einer Speicherverwendung, einer Festplattenverwendung und einem IO-Schnittstellendurchsatz umfasst.

## Revendications

1. Procédé d'équilibrage de données comprenant :
l'obtention (S201) de rapports de charge de n facteurs de pondération et n valeurs de pondération de chaque noeud virtuel de m noeuds physiques dans un système de base de données distribué, dans lequel m et n sont des nombres entiers supérieurs à 1 ;
le fait d'effectuer (S202) un moyennage pondéré sur la base des rapports de charge des n facteurs de pondération et des n valeurs de pondération, pour obtenir un coefficient de pondération de chaque noeud virtuel ;
l'obtention (S203) d'un comptage de fragments standard sur la base d'un coefficient de pondération d'un noeud virtuel associé à chaque noeud physique ;
la détermination (S204), sur la base des comptes de fragment standard correspondants respectifs des m noeuds physiques, si une distribution de données satisfait un critère d'équilibrage de données ; et
si non, le fait d'effectuer un traitement d'équilibrage de données sur les m noeuds physiques, **caractérisé en ce que** le fait d'effectuer un traitement d'équilibrage de données sur les m noeuds physiques comprend :
le fait d'effectuer, selon une règle de migration prédéfinie, une migration simulée sur des noeuds virtuels associés aux m noeuds physiques, et la détermination du fait que les m noeuds physiques satisfont le critère d'équilibrage de données après une migration simulée ;
si oui, le fait d'effectuer, selon la règle de migration, une migration effective sur les noeuds virtuels associés aux m noeuds physiques ; ou
si non, la sélection d'au moins un noeud virtuel parmi les noeuds virtuels associés aux m noeuds physiques pour diviser, et effectuer, selon la règle de migration, une migration effective sur des noeuds virtuels associés aux m noeuds physiques après division, dans lequel la sélection d'au moins un noeud virtuel parmi les noeuds virtuels associés aux m noeuds physiques pour effectuer la division comprend :
la détermination d'un noeud physique avec un comptage de fragments standard maximal à partir des m noeuds physiques ;
la détermination d'un noeud virtuel avec un coefficient de pondération maximal dans le noeud physique avec le comptage de fragments standard maximal ; et
la division du noeud virtuel avec le coefficient de pondération maximal en au moins deux noeuds virtuels d'une même taille, dans lequel la règle de migration comprend :
le regroupement, sur la base des coefficients de pondération, des noeuds virtuels associés aux m noeuds physiques ;
l'affectation de manière égale de noeuds virtuels dans chaque groupe aux m noeuds physiques, dans lequel un nombre entier de noeuds virtuels dans un même groupe sont attribués à chacun du noeud physique ; et
l'attribution de noeuds virtuels à gauche dans tous les groupes après une affectation égale aux m noeuds physiques, dans lequel le regroupement, sur la base des coefficients de pondération, des noeuds virtuels associés aux m noeuds physiques comprend :
l'obtention de coefficients de pondération des noeuds virtuels associés aux m noeuds physiques ; et
la détermination d'une plage de coefficients de pondération à laquelle un coefficient de pondération de chaque noeud virtuel appartient, et la catégorisation du noeud virtuel dans un groupe correspondant à la plage de coefficients de pondération du noeud virtuel.

2. Procédé selon la revendication 1, dans lequel le critère d'équilibrage de données est **caractérisé par** comprenant Lₘₐₓ < L_{average}x(1 + a) et Lₘᵢₙ > L_{moyenne}x(1-α), dans lequel et représente une relation et, Lₘₐₓ est le nombre maximal de barrages standards des noeuds physiques, L_{moyenne} est un comptage moyen de barrages standard des m noeuds physiques, Lₘᵢₙ est un comptage de fragments standard minimal des noeuds physiques, α est un coefficient d'écart, et 0 ≤ α ≤ 1.

3. Procédé selon l'une quelconque des revendications 1 à 2, dans lequel les n facteurs de poids sont **caractérisés par** comprenant soit un facteur de pondération de niveau de service soit un facteur de pondération de niveau de ressources ;
le facteur de pondération de niveau de service comprend soit une fréquence d'accès soit un compte d'enregistrement d'un objet de service ; et
le facteur de pondération de niveau de ressource est **caractérisé par** comprenant au moins l'un parmi une utilisation de CPU, une utilisation de mémoire, une utilisation de disque et un débit d'interface d'E/S.

4. Appareil d'équilibrage de données, comprenant :
un module d'obtention (501), configuré pour obtenir des rapports de charge de n facteurs de pondération et n valeurs de pondération de chaque noeud virtuel de m noeuds physiques dans un système de base de données distribué, dans lequel m et n sont des nombres entiers supérieurs à 1 ;
un module de calcul de coefficient de pondération (502), configuré pour effectuer un moyennage pondéré sur la base des rapports de charge des n facteurs de pondération et des n valeurs de pondération, pour obtenir un coefficient de pondération de chaque noeud virtuel ;
un module de calcul de comptage de fragments standard (503), configuré pour obtenir un comptage de fragments standard sur la base d'un coefficient de pondération d'un noeud virtuel associé à chaque noeud physique ;
un module de détermination d'équilibrage (504), configuré pour déterminer, sur la base des comptages de fragment standard correspondants respectifs des m noeuds physiques, si une distribution de données satisfait un critère d'équilibrage de données ;
et
un module d'équilibrage (505), configuré pour effectuer un traitement d'équilibrage de données sur les m noeuds physiques si un résultat de détermination du module de détermination d'équilibrage est négatif, **caractérisé en ce que** le module d'équilibrage comprenant :
une unité de simulation de migration, configurée pour effectuer, selon une règle de migration prédéfinie, une migration simulée sur des noeuds virtuels associés aux m noeuds physiques ;
une unité de détermination, configurée pour déterminer si les m noeuds physiques satisfont le critère d'équilibrage de données après une migration simulée ;
une unité de migration réelle, configurée pour effectuer, selon la règle de migration, une migration réelle sur les noeuds virtuels associés aux m noeuds physiques si un résultat de détermination de l'unité de détermination est positif ; et
une unité de division, configurée pour : si un résultat de détermination de l'unité de détermination est négatif, sélectionner au moins un noeud virtuel parmi les noeuds virtuels associés aux m noeuds physiques pour diviser, et effectuer, selon la règle de migration, une migration réelle sur des noeuds virtuels associés aux m noeuds physiques après la division, dans lequel l'unité de division est configurée pour :
déterminer un noeud physique avec un comptage de fragments standard maximal à partir des m noeuds physiques ;
déterminer un noeud virtuel avec un coefficient de pondération maximal dans le noeud physique avec le comptage de fragments standard maximal ; et
diviser le noeud virtuel avec le coefficient de pondération maximal en au moins deux noeuds virtuels d'une même taille, dans lequel la règle de migration comprend :
le regroupement, sur la base des coefficients de pondération, des noeuds virtuels associés aux m noeuds physiques ;
l'affectation de manière égale de noeuds virtuels dans chaque groupe aux m noeuds physiques, dans lequel un nombre entier de noeuds virtuels dans un même groupe sont attribués à chacun du noeud physique ; et
l'attribution de noeuds virtuels restants dans tous les groupes après une affectation égale aux m noeuds physiques.

5. Appareil selon la revendication 4, dans lequel le critère d'équilibrage de données est **caractérisé par** comprenant Lₘₐₓ < L_{average}x(1 + a) et Lₘᵢₙ>L_{moyenne}x(1 - a), dans lequel et représente une relation et, Iₘₐₓ est le nombre maximal de barrages standards des noeuds physiques, I_{moyenne} est un comptage moyen de barrages standard des m noeuds physiques, Iₘᵢₙ est un comptage de fragments standard minimal des noeuds physiques, α est un coefficient d'écart, et 0 ≤ α ≤ 1.

6. Appareil selon l'une quelconque des revendications 4 à 5, dans lequel les n facteurs de pondération sont **caractérisé par** comprenant soit un facteur de pondération de niveau de service soit un facteur de pondération de niveau de ressources ;
le facteur de pondération de niveau de service comprend soit une fréquence d'accès soit un compte d'enregistrement d'un objet de service ; et
le facteur de pondération de niveau de ressource comprend une utilisation de CPU, et/ou une utilisation de mémoire, et/ou une utilisation de disque et/ou un débit d'interface E/S.
